Europäisches Patentamt

European Patent Office

Office européen des brevets

(19)

(11) EP 0 878 756 A2

## (12) EUROPEAN PATENT APPLICATION

(43) Date of publication:
18.11.1998 Bulletin 1998/47

(51) Int Cl.⁶: G06F 3/06

(21) Application number: 98301091.9

(22) Date of filing: 13.02.1998

(84) Designated Contracting States:
AT BE CH DE DK ES FI FR GB GR IE IT LI LU MC
NL PT SE
Designated Extension States:
AL LT LV MK RO SI

(30) Priority: 13.05.1997 JP 121883/97

(71) Applicant: FUJITSU LIMITED
Kawasaki-shi, Kanagawa 211-8588 (JP)

(72) Inventor: Takatsu, Kazuma, c/o Fujitsu Limited
Kawasaki-shi, Kanagawa 211-8588 (JP)

(74) Representative: Stebbing, Timothy Charles et al
Haseltine Lake & Co.,
Imperial House,
15-19 Kingsway
London WC2B 6UD (GB)

## (54) Magnetic disk and magnetic disk control apparatus

(57)    When one or more physical disks (12) are divided into a plurality of units as logical disks, one or more of the plurality of units are further divided into a plurality of appropriately arranged areas in a magnetic disk. Consequently, the time taken for moving a magnetic head can be shortened, and the efficiency in accessing a secondary storage device can be improved. The magnetic disk is used in a system including a magnetic disk control apparatus (11) provided between a higher order device (10), for issuing a data input/output instruction to a lower order magnetic storage device, and the lower order magnetic storage device (12).

FIG. 4

Printed by Jouve, 75001 PARIS (FR)

## Description

The present invention relates to a peripheral device of an electronic computer system, and more specifically to a magnetic disk and a magnetic disk control apparatus capable of shortening the time taken in accessing a plurality of logical disks when a physical disk is divided into a plurality of logical disks.

Magnetic disks are popularly used in peripheral devices of an electronic computer system. For example, an FBA (fixed block architecture) disk used for a hard disk as a secondary storage device in a personal computer is divided into a plurality of logical disks for actual use.

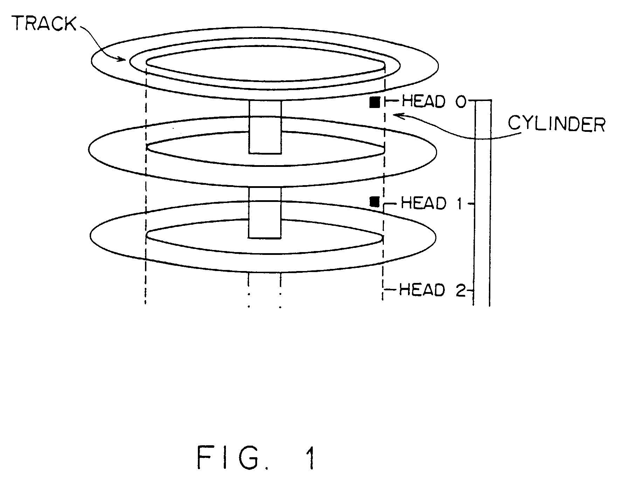

FIG. 1 shows an outline of the structure of a medium for a magnetic storage device. As shown in FIG. 1, the magnetic storage device includes a plurality of media and a plurality of reading/writing heads. A medium has several hundreds through several thousands of tracks. In each medium, a set of tracks at the same position from the bottom to the top is referred to as a cylinder. In the following explanation, the entire device shown in FIG. 1 is a physical disk.

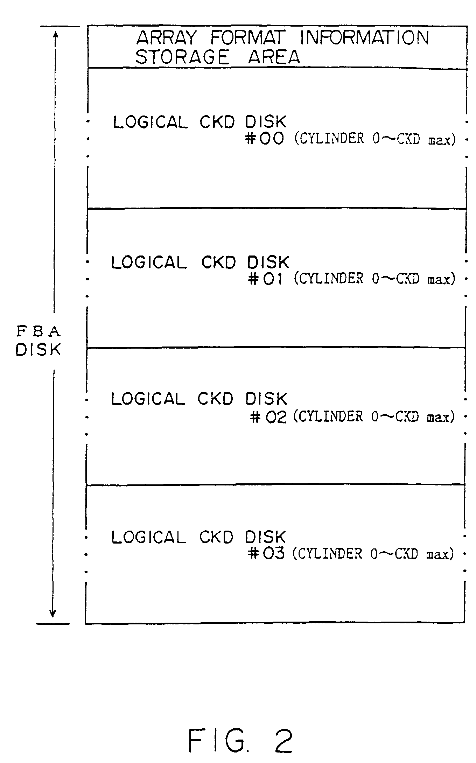

FIG. 2 shows an example of a conventional method of arranging logical disks when a single logical disk, that is, an FBA disk, is divided into a plurality of logical disks. In FIG. 2, the FBA disk is divided into four logical disks (units #00 through #03). Each unit includes cylinders 0 through $CKD_{max}$ as groups of tracks viewed from a higher order device of the computer, that is the CPU. The CKD is an abbreviation for a count key data, and indicates that a CKD format in which a variable block size is used in the higher order device of the computer is adopted. In an actual round disk, a unit #00 is arranged outermost while a unit #03 is arranged innermost (at the center).

Normally, areas of a logical disk are not equally used, and the first half is used more frequently than the second half. When the higher order device accesses a plurality of logical disks (units), there is a high probability that the first half of each logical disk is accessed. For example, when each logical disk shown in FIG. 2 has the cylinder numbers 0 through 1000, the higher order device probably accesses the cylinder numbers 0 through 100.

For example, when the higher order device accesses the cylinder numbers 0 through 100 of the unit #03 after the access to the cylinder numbers 0 through 100 of the unit #00 shown in FIG. 2, the magnetic head moves for a long distance on the FBA disk, thereby taking a long time for a mechanical operation.

The problem of the long movement of the head can be avoided if the next unit to be accessed exists on a different physical disk. However, at present, the capacity of one physical disk is from several to 10 gigabytes while the capacity of one logical disk is 1.2 through 2.8 gigabytes. Therefore, when one logical disk unit is assigned to one physical disk, there is no problem of a long time required for movement, but there arises the problem of a high cost and a larger space required. Therefore, normally a plurality of logical units are assigned to a single physical disk. In such an environment, since a device accesses another unit on the same disk, the above described problem of a long time required for movement arises.

The present invention aims at providing a magnetic disk and a magnetic disk control apparatus for shortening the time taken for a mechanical operation such as movement of a magnetic head during the operation of the magnetic disk so that the efficiency in accessing to a secondary storage device can be improved.

The magnetic disk according to the present invention is used in a magnetic storage system including a magnetic disk control apparatus provided between a higher order device for issuing a data input/output instruction to a lower order magnetic storage device and a lower order magnetic storage device in a variable or fixed length storage format.

A feature of the magnetic disk according to the present invention resides in that, when one or more physical disks are divided into a plurality of units as logical disks, one or more of the plurality of units are further divided into a plurality of appropriately arranged areas.

The magnetic disk according to the present invention can include an area for storing array format information about the array format of the above described divided areas. The magnetic disk control apparatus is capable of reading the array format information so that it can recognize the array of the divided areas.

Furthermore, when the data storage format of the magnetic disk used in the lower order magnetic storage device is different from the data storage format predetermined in a data input/output instruction issued by the higher order device, the magnetic disk control apparatus according to the present invention can convert the storage format to adjust the difference.

As described above, by arranging a logical CKD disk after dividing it into a plurality of areas according to the present invention, the time taken for a mechanical operation such as a seeking operation required when access is gained from one logical CKD disk to another logical CKD disk can be shortened, and the process time in accessing a plurality of units can also be shortened. Furthermore, the array on a disk can be recognized by containing in a physical disk array format information about the array of logical disks on a physical disk and by fetching the information on the control apparatus side. Therefore, even if there are disks having different array formats, the disks can be appropriately controlled, thereby largely improving the entire efficiency of an electronic computer system having a secondary storage device.

FIG. 1 shows an outline of the structure of a conventional medium in a magnetic storage device;

FIG. 2 shows an example of a conventional system of dividing a physical disk into a plurality of logical disks;

FIG. 3 shows a system of arranging logical disks embodying the present invention;

FIG. 4 is a block diagram showing the configuration of an electronic computer system using the system of arranging logical disks embodying the present invention;

FIG. 5 shows an example of arranging logical disks on a physical disk according to an embodiment of the present invention;

FIG. 6 is a flowchart showing the array format information reading process on a disk;

FIG. 7 shows an example of the storage in an array format information storage area;

FIG. 8 shows the storage of records in a CKD format;

FIG. 9 shows the format of data blocks corresponding to the record format of a CKD track;

FIG. 10 shows the system of dividing a data block 0 on an FBA disk;

FIG. 11 shows a flowchart showing the staging process in response to a read instruction;

FIG. 12 shows an entry of an active TCB pointer (ATP);

FIG. 13 shows the data structure of an entry of an ATP for a device adaptor (DA);

FIG. 14 shows the storage area of a task control block (TCB);

FIG. 15 shows the storage in a common definition area in a TCB;

FIG. 16 shows the computation of an address in the logical disk array system shown in FIG. 5;

FIG. 17 shows a read start address when the host computer specifies the sector value of 5;

FIG. 18 shows the flow (1) of the operations in the magnetic disk control apparatus;

FIG. 19 shows the flow (2) of the operations in the magnetic disk control apparatus; and

FIG. 20 shows the flow (3) of the operations in the magnetic disk control apparatus.

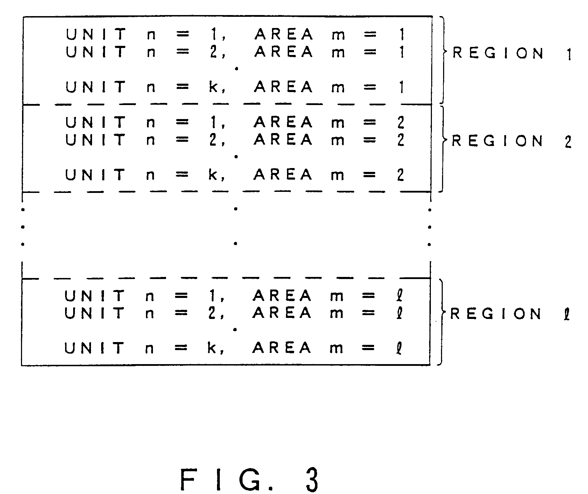

FIG. 3 shows a system of arranging logical disks on a magnetic disk embodying the present invention. That is, FIG. 3 shows the system of arranging logical disks on a magnetic disk used in a magnetic storage system including a magnetic disk control apparatus provided between a higher order device for issuing a data input/output instruction to a lower order magnetic storage device and a lower order magnetic storage device in a variable or fixed length storage format. It further shows the state in which, when one or more physical disks are divided into a plurality of units as logical disks, one or more of the plurality of units are further divided into a plurality of appropriately arranged areas.

For example, on the magnetic disk embodying the present invention as shown in FIG. 3, divided areas are arranged as follows. Assuming that the above described plural units are n = 1 through k, and the plurality of areas are m = 1 through $\ell$, the area m = 1 corresponding to the unit n = 1 through k is arranged as a region 1 in the order from n = 1 to n = k at the outermost portion of the disk. Then, the area m = 2 corresponding to the unit n = 1 through k is arranged as a region 2. Similarly, the area m = $\ell$ corresponding to the unit n = 1 through k is arranged as the final region $\ell$ at the innermost position on the disk.

On the magnetic disk, there is an area for storing the array format information about the array of the divided areas on the disk. The magnetic disk control apparatus can read the array format information to recognize the array of the divided areas.

Then, the magnetic disk control apparatus reads the array format information about each of one or more physical disks and stores the array format information in an area corresponding to each of the physical disks, thereby controlling each physical disk in a system containing physical disks having different array formats.

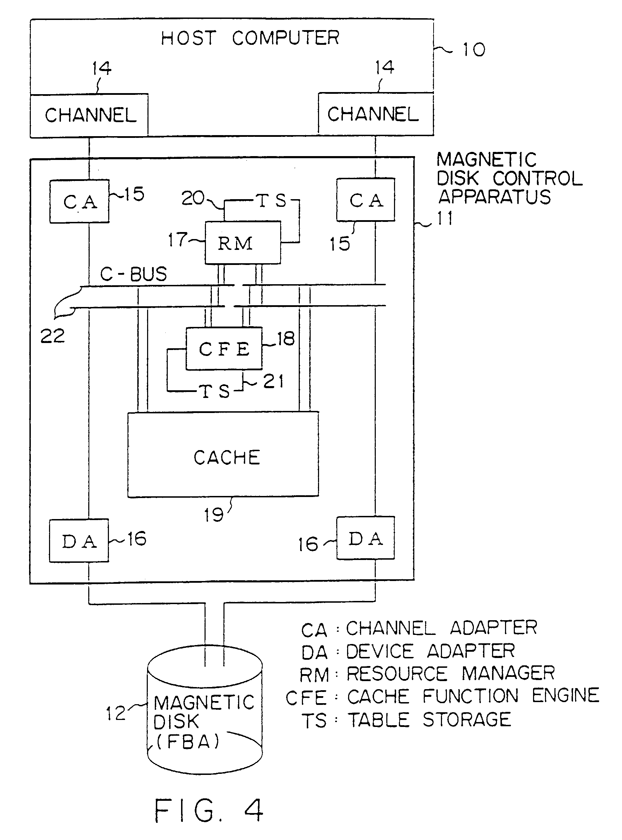

FIG. 4 is a block diagram showing a configuration of the electronic computer system using the magnetic disk embodying the present invention. In FIG. 4, the system comprises a host computer 10 as a higher order device, a magnetic disk control apparatus 11, and a magnetic disk 12 as a lower order device. Two systems are provided for each of a channel adapter (CA) 15 as an interface module between a channel 14 of the host computer 10 and the magnetic disk control apparatus 11, and a device adapter (DA) 16 as an interface module between the magnetic disk control apparatus 11 and the magnetic disk 12. The duplicated systems are required because the magnetic disk control apparatus has a duplex configuration so that if one system becomes faulty and fails, another system can continue the process.

The magnetic disk control apparatus 11 comprises a direct access storage device (DASD) subsystem, that is, a resource manager (RM) 17 as a module for controlling the allotment and release in the magnetic disk control apparatus 11 and the magnetic disk 12; a cache function engine (CFE) 18 as a module for managing the memory in the magnetic disk control apparatus, that is, a cache 19; table storage (TS) 20 and 21 for storing, for example, control information corresponding to the RM 17 and the CFE 18; and a C-bus 22 for communications among the modules such as the CA 15, DA 16, RM 17, CFE 18, and cache 19, etc.

According to the present embodiment, a data input/output instruction is issued based on the variable length block size CKD (count key data) format at the host computer 10 as a higher order device. On the contrary, the magnetic disk 12 as a lower order device uses the fixed length block size FBA (fixed block architecture) format. The magnetic disk control apparatus 11 provided between the higher order device and the lower order device performs conversion between the CKD format and the FBA format as explained later.

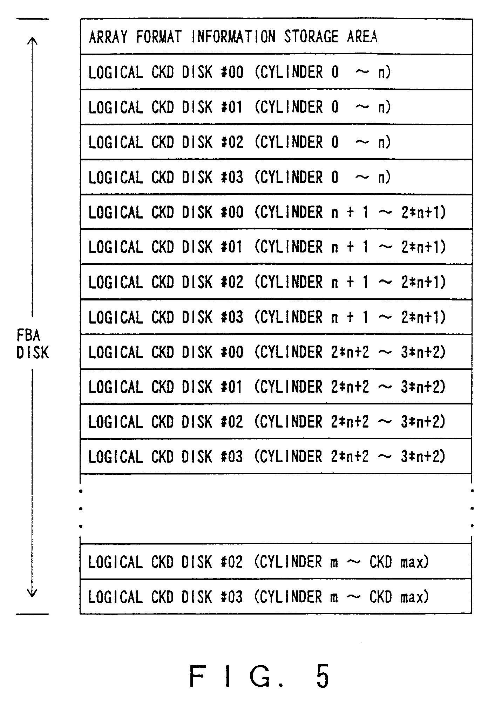

FIG. 5 shows an example of dividing the FBA disk according to the present embodiment. In FIG. 5, as in the example shown in FIG. 2, the FBS disk as a single physical disk is divided into four units #00 through #03 as four logical CKD disks. Each unit is further divided into n + 1 (cylinder number). That is, the array format information storage area indicating the array of the divided logical disks on the FBA disk is positioned on the outermost circumference of the disk. Inside the area, divided units 00 through 03 having the cylinder numbers 0 through n are arranged. Inside these divided areas, divided units 00 through 03 having the cylinder numbers n + 1 through 2n + 1 are arranged. All remaining divided areas are similarly arranged.

If the number of physical cylinders in a divided area is too small when the units are divided, then frequently used areas are scattered on a disk, thereby causing lower access efficiency. Furthermore, on some disk units, a seeking operation can be performed more quickly for the cylinder beyond the next cylinder than for the next cylinder. On such a disk device, one area is set to contain two physical cylinders. That is, the size of divided areas depends on the feature of an applicable disk.

Assume that, in FIG. 4, the host computer 10 accesses the cylinder O/head O of the unit #03 after accessing the cylinder O/head O of the unit #00 of the magnetic disk 12, that is, the FBA disk shown in FIG. 5. The DA 16 in the magnetic disk control apparatus 11 computes the access position on the FBA disk from the value of the cylinder/head provided by the host computer 10 as described later, that is, computes the address, and issues a read command or a write command to the FBA disk. After transferring the data in the unit #00, a read/write command is issued to the unit #03.

In this case, if the four logical disks of the unit #00 through #03 are sequentially arranged as a group as shown in the example of the conventional system shown in FIG. 2, then the magnetic head skips the units #01 and #02 on the FBA disk, and should be positioned for the unit #03. On the other hand, if the arrangement is made as shown in FIG. 5 according to the present embodiment, then the time taken for a mechanical operation such as a seeking operation on the FBA disk can be shortened for the same cylinder number, and the disconnection time required at a unit switch can also be shortened.

The array format information storage area at the start of the FBA disk shown in FIG. 5 stores array format information in such a way that the magnetic disk control apparatus 11 shown in FIG. 4 can recognize the array format of the logical disk on the FBA disk. The DA 16 in the magnetic disk control apparatus 11 can recognize whether the array format of the disk to be controlled is shown in FIG. 5 or FIG. 2 showing an example of the conventional system, by reading the data stored on the track for storing the array format information. The read result is stored in the memory not shown in FIG. 4 for each FBA disk of the lower order device so that the disks can be controlled even when the FBA disks in different array formats coexist.

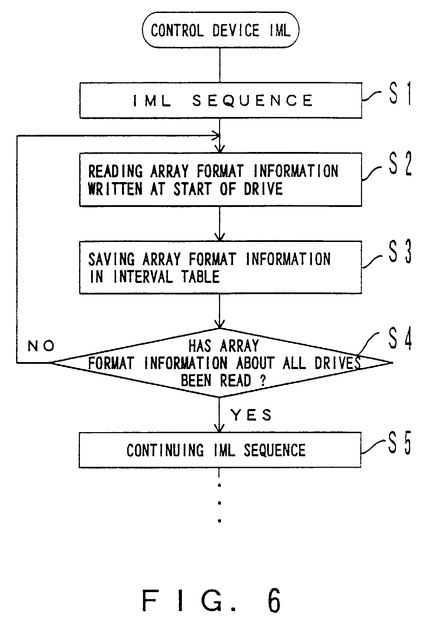

FIG. 6 is a flowchart showing the process, performed in the magnetic disk control apparatus 11 shown in FIG. 4, of reading array format information at the start of the FBA disk shown in FIG. 5. In FIG. 6, the reading process is performed as a part of the IML sequence in the magnetic disk control apparatus. The IML is short for initial microprogram loading. In a personal computer, initial program loading (IPL) is performed at the restart of the computer. With the magnetic disk control apparatus, IML refers to restarting the apparatus. In the IML sequence, hardware initialization, and program loading are performed to a printed circuit board forming each module such as the CA 15, DA 16, etc. shown in FIG. 4 so that the magnetic disk control apparatus can be smoothly operated. Furthermore, a table provided in each of the CA, DA, etc. is reconstructed.

In FIG. 6, when a part of the IML sequence is completed in step S1, the array format information of the FBA disk shown in FIG. 5 is read in steps S2 through S4. First, in step S2, the array format information written at the start of the magnetic disk drive is read. In step S3, the array format information is saved in the table of the magnetic disk control apparatus. In step S4, it is determined whether or not all drive array format information has been read. If not, the processes in steps S2 through S4 are repeated. If yes, the process of the IML sequence continues in step S5.

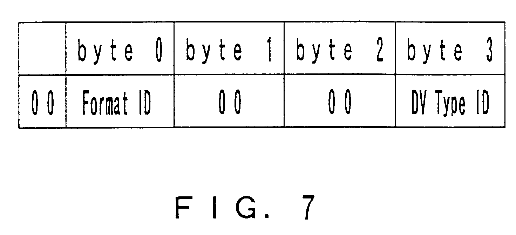

FIG. 7 shows an example of the storage in the array format information storage area shown in FIG. 5. In FIG. 7, the format ID in byte 0 indicates whether the array format of the logical disk is the conventional format shown in FIG. 2 or the format according to the present invention shown in FIG. 5. When this area also stores the cylinder width, the number n of the cylinders in each of the divided areas shown in FIG. 5 can be variable. The DV type ID in byte 3 indicates the type of a device.

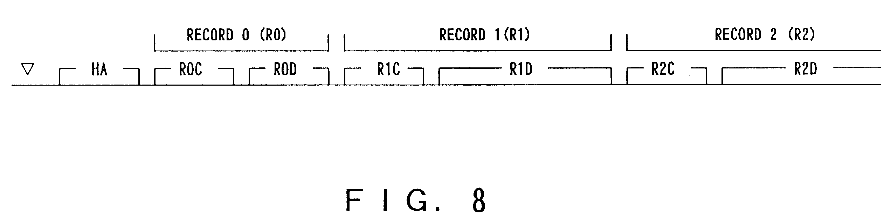

Described below is the conversion between the CKD format used in the host computer 10 as a higher order device and the FBA format used in the magnetic disk 12 as a lower order device. FIG. 8 shows the record storage format in the CKD format. On the CKD disk, data is stored on the media for each of the count, key, data preceded by the home address (HA). The length of the key/data portions can be variable. A set of the count/key/data portions is referred to as a record. In FIG. 8, for example, record 0 is formed by count ROC and data ROD, and contains no keys.

When the magnetic storage format in a lower order device is a fixed length, the data in a variable length format as shown in FIG. 8 cannot be written as is. Therefore, the magnetic disk control apparatus 11 requires a converting process from the CKD format to the FBA format. Normally, this process is called a COF (CKD on FBA) control.

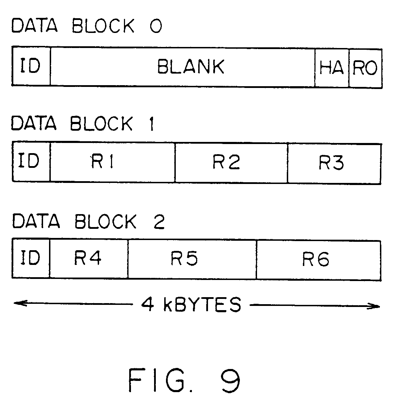

In the magnetic disk control apparatus 11, 1-track data is divided into 4-kilobyte data blocks to process 1-track data in the CKD format shown in FIG. 8. This data block is the minimum unit in a staging process in the DA 16 described later. FIG. 9 shows the data block. The conversion into the data block is performed in the memory (cache 19) in the magnetic disk control apparatus 11. In FIG. 9, for example, record RO contains count ROC and data ROD. The storage area for control information referred to as a data block ID is located at the start of one data block. The data block ID stores a cylinder value and a head value of a CKD disk, a record number of the data block, etc. The data block 0 has a special format, that is, contains only an HA (home address) and record 0 (R0). The area between the data block ID to the start of the HA is blank. The data of and after the record 1 (R1) in the record format of the CKD track is stored immediately after the ID of the data block 1.

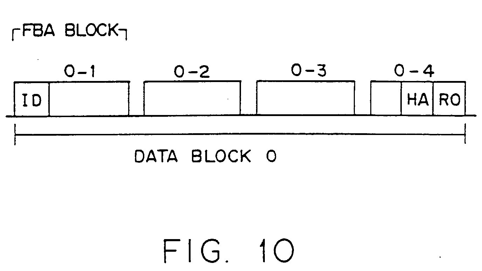

The data stored in a fixed-length data block in the magnetic disk control apparatus 11 is written to the FBA disk medium according to the format size of the FBA disk. Assuming that the format size of the FBA, that is, the length of the FBA block, is 1,024 bytes, the 4-kilobyte data of the data block shown in FIG. 9 is divided into four blocks and written to the FBA disk. FIG. 10 shows the result of dividing the data block 0 shown in FIG. 9. Similarly, the data block 1 and the subsequent blocks are divided into four blocks on the FBA disk.

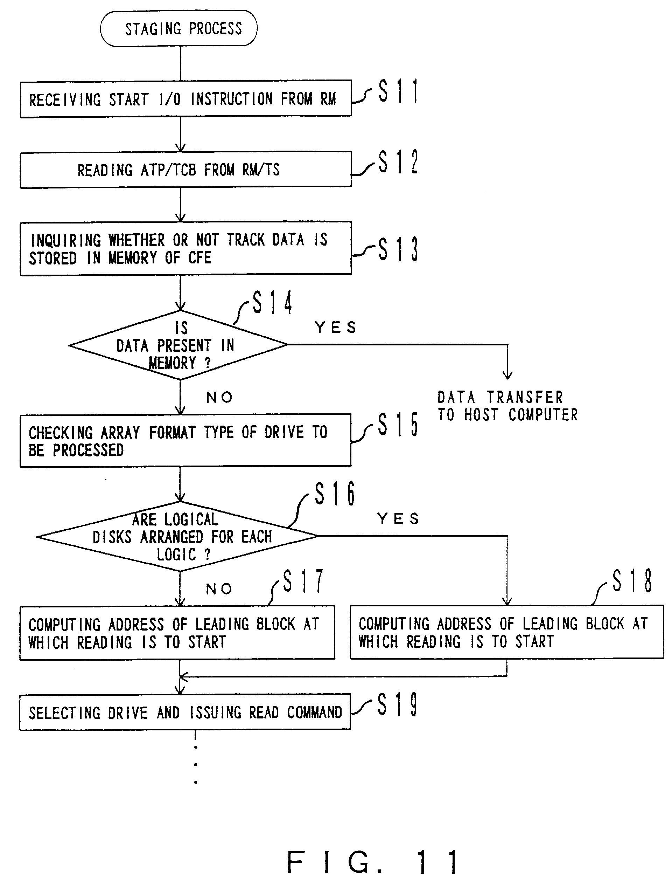

FIG. 11 is a flowchart showing the staging process performed by the DA 16 as a process of reading data. The staging process is performed by storing the data to be read on the cache 19 when the magnetic disk control apparatus 11 receives an instruction to read data from the host computer 10. In this process, when a request to read data in a track is received from the host computer 10, the DA 16 inquires of the CFE 18 whether or not the track data is stored in the cache 19. If the data is stored in the cache 19, the CA 15 transfers the data in the cache 19 to the host computer 10. If the data is not stored in the cache 19, then the DA 16 performs the staging process and the CA 15 transfers to the host computer 10 the data stored in the cache 19 by the DA 16.

In step S11 shown in FIG. 11, the DA 16 receives a start I/O instruction from the RM 17. As described above, the communications among the modules in the magnetic disk control apparatus 11 are established through the C-bus 22. The RM 17 issues to the DA 16 a C-bus command to perform the staging process. Based on the command number, the DA 16 recognizes that the staging process should be performed.

In step S12 shown in FIG. 11, the ATP/TCB is read from the TS 20 for the RM 17. The ATP (active TCB pointer) stores an address, etc. indicating where in the TS 20 the TCB (task control block) is stored. To read the contents of the TCB, the ATP is read first. The TCB stores what process should be performed (which cylinder of which unit, which head record to be processed, read or write, etc.). Since a plurality of TCBs are stored in the TS 20, the ATP is read to determine the TCB to be read.

In step S13, it is inquired whether or not the track data, that is, the data of the track which contains the record to be read, is stored in the cache 19 for the CFE 18. It is determined in step S14 whether or not the data is stored in the cache. If yes, the data is transferred by the CA 15 to the host computer 10.

If the data is not stored in the cache, the array format of the logical disk is checked in step S15 according to the array format information of the drive to be processed. In step S16, it is determined whether or not the array of the logical disks is set for each logic.

If it is set for each logic, that is, the array format of the conventional example shown in FIG. 2 is adopted, then the address of the leading block at which reading is to start is computed in step S18. If it is not set for each logic, that is, the array format according to the present invention shown in FIG. 5 is adopted, then the address of the leading block at which reading is to start is computed in step S17. The address computation is described later. Then, in step S19, a drive is selected, and a read command is issued.

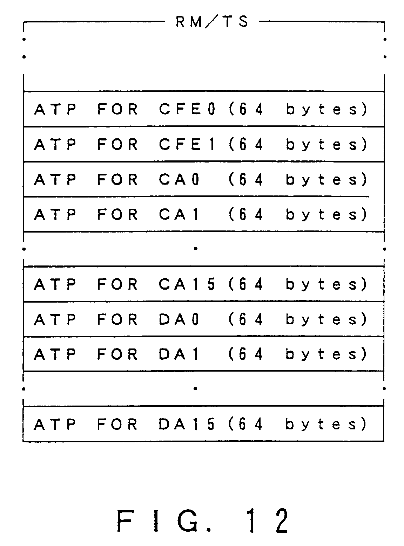

The contents of the active TCB pointer (ATP) and the task control block (TCB) are described below by referring to FIGs. 12 through 15. FIG. 12 shows each entry of the ATP. One entry of the ATP occupies 64 bytes. Entries for the maximum number of physical slots (the number of slots into which printed circuit boards used as each module are inserted) for each module such as the CA 15, DA 16, CFE 18, etc. shown in FIG. 4 exist in the RM/TS. For example, up to 16 printed circuit boards are used for the CA 15 and DA 16.

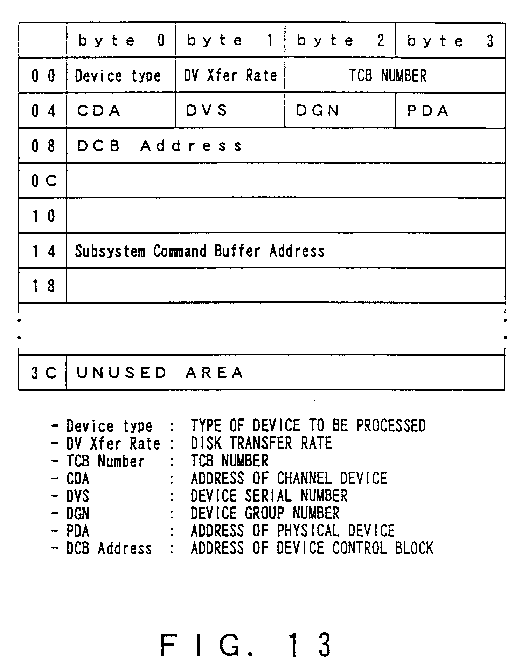

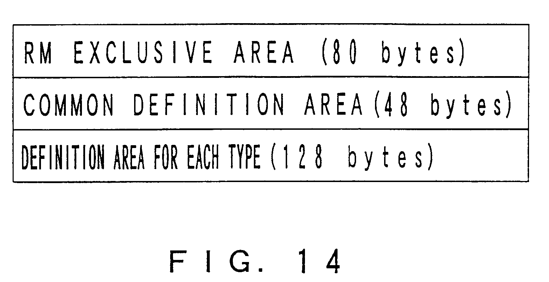

The format of an active TCB pointer is a little different for each module. FIG. 13 shows the structure of the data of the ATP for the DA 16. In FIG. 13, the data directly related to the present invention is the TCB number stored in bytes 2 and 3 of the first four bytes. The task control block (TCB) is stored in the RM/TS, and one entry occupies 256 bytes. Up to 1,024 TCBs can be generated in the RM/TS. FIG. 14 shows a storage area for one TCB. As shown in FIG. 14, one TCB entry comprises an RM exclusive area to be used by the RM for control, a common definition area, and a definition area for each type.

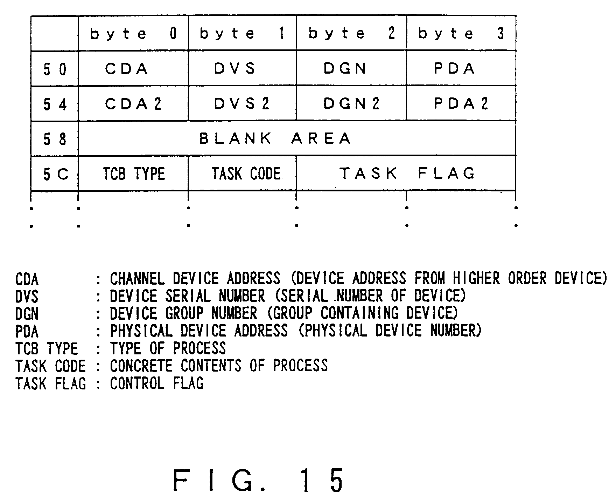

FIG. 15 shows the contents of the common definition area. In the stored data, only the TCB TYPE indicating the type of process and the TASK CODE indicating the concrete process are closely related to the present invention.

The structure of the definition area for each type shown in FIG. 14 is different for each TCB type. In the reading/ writing process for a disk, a cylinder value, a head value, etc. for a disk are stored.

In the flowchart of the staging process shown in FIG. 11, even if the DA 16 receives a start operation instruction (start I/O instruction) from the RM 17 in step S11, the content of the process to be performed cannot be defined only based on the instruction itself. Therefore, it is necessary to read a TCB type/task code from the stored contents of the TCB. To know which of the 1,024 TCBs should be read, the ATP is first read. The ATP stores TCB numbers indicating which TCB should be read, and the DA 16 recognizes the contents of the process to be performed.

The method of computing the address in steps S17 and S18 shown in FIG. 11 is described below. First, the words and abbreviation for use in address computation are described. CYL indicates a cylinder value specified by a higher order device. HD indicates a head value specified by a higher order device. OFFSET indicates an offset value of a logical disk in a physical disk. When one physical disk contains four logical disks as shown in FIGs. 2 and 5, the offset value is one of the values 0 through 3. The number of OFFSETs indicates the number of logical disks into which one physical disk is divided. CYL 2 indicates the number of cylinders contained in an area after dividing one logical disk into smaller areas. In FIG. 5, the number is n + 1. The number of FBA blocks per track is the number of FBA blocks for the capacity of one track of a CKD disk. The capacity of one track is a fixed value. For example, if the format size of an FBA block is 1,024 bytes, when the capacity of one track is 51 Kbytes, then one track corresponds to 52 FBA blocks. The cylinder value is basically regardless of the cylinder number shown in FIG. 5. The head value is regardless of the head number (head 0, ...) shown in FIG. 1.

First, in step S18, that is, in the case of the conventional example shown in FIG. 2, the address of the leading block at which reading is to start can be computed by the following equation. The meaning of the leading block is described later.

$$
\text{address} = \underbrace{\text{OFFSET} \times (\text{number of FBA blocks of one logical disk})}_{1} + \underbrace{\{(\text{CYL}) \times (\text{number of heads of one cylinder})}_{2} + \underbrace{\text{HD}}_{3}\} \times (\text{number of FBA blocks of one track})
$$

$$
\ldots\ldots \quad (1)
$$

In this equation, the number of FBA blocks of the logical disks above the logical disk storing the track containing an object record (on the outer circumference on an actual disk) is first computed by 1 above. Then, the number of tracks between the start of the logical disk containing the object record and the cylinder containing the object record is computed by 2 above. The computation result by 2 is added to the head value of 3 above to obtain the number of tracks before the track containing the object record. Then, the sum of 2 and 3 above is multiplied by the number of the FBA blocks per track to obtain the number of the FBA blocks between the start of the logical disk containing the object record and the object track. The product is added to the number of the FBA blocks obtained by 1 above to compute the number of the FBA blocks from the start of the FBA disk, that is, the address of the leading block at which reading is to start.

Described below is the process in step S17, that is, the computation of the address of the leading block shown in FIG. 5. The address of the leading block is computed by the following equation.

$$
\text{address} = [\{\underbrace{\overbrace{(\text{quotient obtained by dividing CYL by CYL2})}^{3}}_{1} \times \underbrace{(\text{CYL2} \times \text{number of OFFSETs})}_{2} + \underbrace{(\text{CYL2} \times \text{OFFSET})}_{4} + \underbrace{(\text{remainder obtained by dividing CYL by CYL2})}_{5}\} \times
$$

```
(number of heads of one cylinder) + HD] × (number of

FBA blocks of one track)  .....  (2)
```

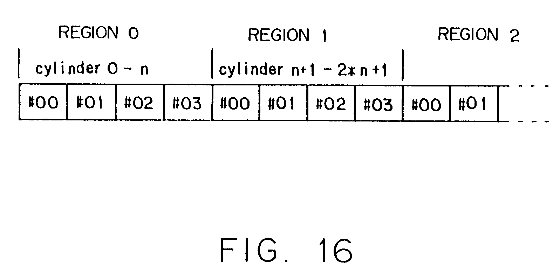

The address computation above is described by referring to FIG. 16. FIG. 16 is obtained by rearranging FIG. 5 into a horizontal format. In FIG. 16, the region containing cylinders 0 through n of unit #00 through #03 is region 0, the region containing cylinders n + 1 through 2n + 1 is region 1, and so forth.

The region containing the cylinder having the cylinder value specified by the higher order device is obtained from the quotient obtained by 1 above in the equation of the address computation, that is, the quotient as a value obtained by the division excluding the remainder. The number of cylinders contained in a region is obtained by 2 above. The number of cylinders (obtained by 3 above) before the start of the region containing the object record is obtained by multiplying 1 by 2, above.

In the region containing the object record, the number of cylinders between the start of the region and the start of the unit containing the object record is obtained by 4 above. The obtained value is added to 3 above to compute the number of cylinders between the start of the FBA disk and the start of the unit containing the object record.

Then, the result is added to 5 above obtained as a remainder of the division of 1 above, that is, the number of cylinders between the start of,the object unit and the object cylinder. Thus, the number of cylinders between the start of the FBA disk and the object cylinder of the object unit is computed.

By multiplying the obtained number of cylinders by the number of heads per cylinder, the number of tracks between the start of the FBA disk and the object cylinder of the object unit is obtained. The product is added to the head value specified by the higher order device to obtain the number of tracks between the start of the FBA disk and the object track in the object cylinder of the object unit. Finally, the address of the leading block containing the object record is computed by multiplying the number of tracks by the number of FBA blocks per track.

Described below is the meaning of the above described leading block at which reading is to start. Normally, in FIG. 4, the host computer 10 specifies a cylinder/head/record when accessing data on a disk. In some cases, the host computer 10 may additionally specify a sector value. If no sector values are specified, the data block 0 described by referring to FIG. 9 is a leading block to be handled in the staging process.

On the other hand, the detailed explanation is omitted here, when the host computer 10 accesses the record 2 described by referring to FIG. 9, since the record 2 is contained in the data block 1, the value obtained by the following equation is added to the address value of the leading block computed in step S17.

$$(\text{data block number} \times 4K) / \text{format size of FBA}$$

$$\text{disk} = (1 \times 4096) / 1024 = 4$$

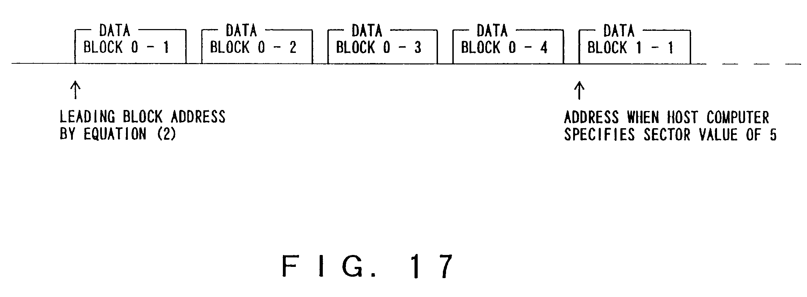

The value obtained by adding 4 to the computed value described in step S17 is specified as an address to actually reading is to start. FIG. 17 shows the result of the computation. The address to actually reading is to start is the address of the first of the four divided from the data block 1.

In the above described embodiment, a higher order device of an electronic computer system adopts the CKD format while the magnetic storage device as a lower order device adopts the FBA format. However, the magnetic disk and the magnetic disk control apparatus according to the present invention is not limited to such a combination. Actually, a higher order device may adopt the FBA format while a lower order device adopts the CKD format. Otherwise, a higher order device and a lower order device can adopt the same format. Furthermore, the present invention can be applicable to the case where the array of logical disks on a disk is based on the combination of the conventional system shown in FIG. 2 and the system according to the present invention.

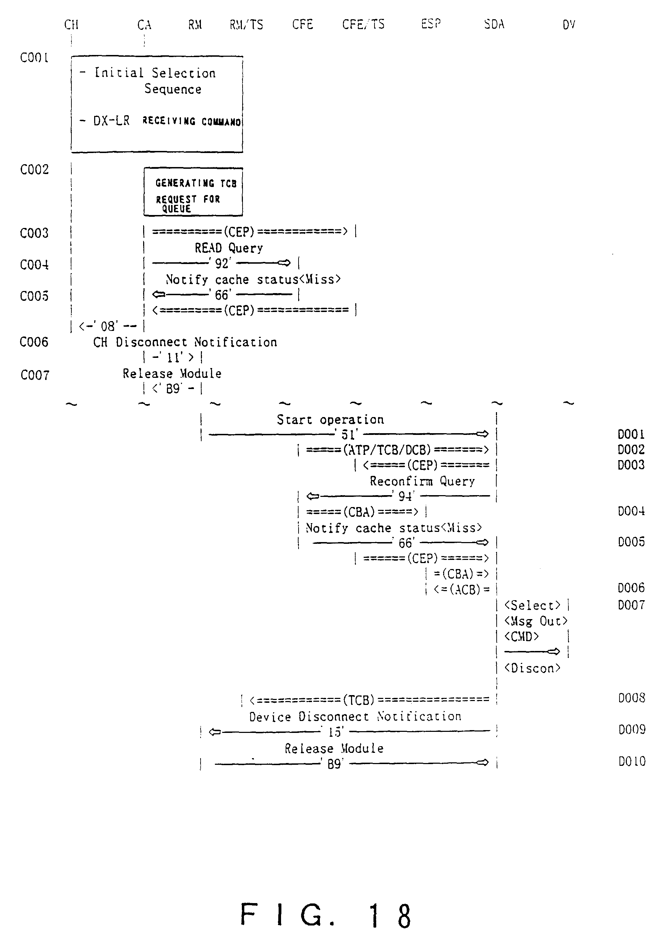

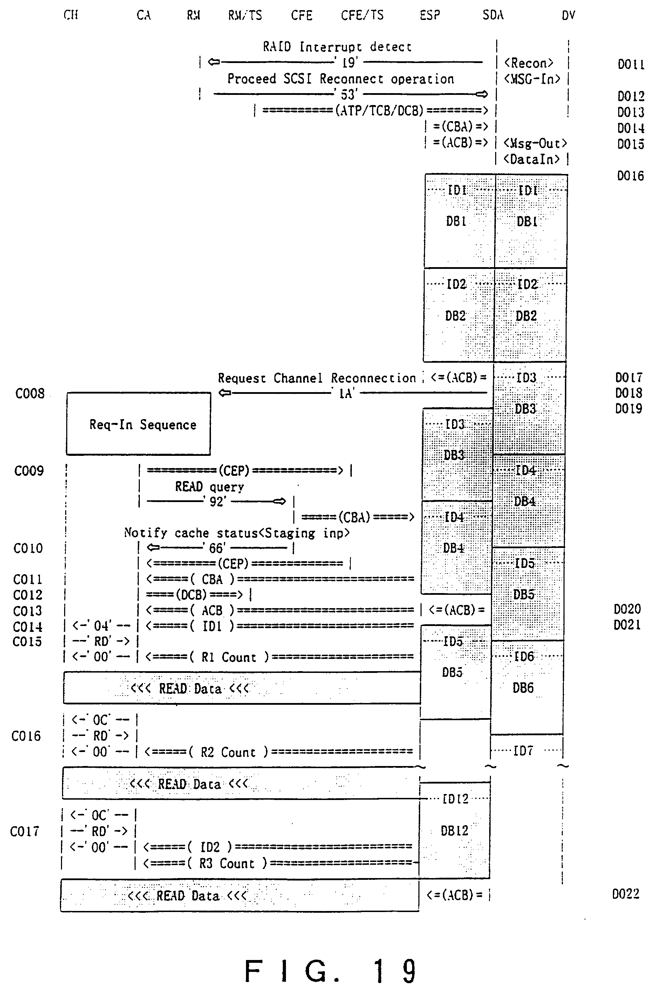

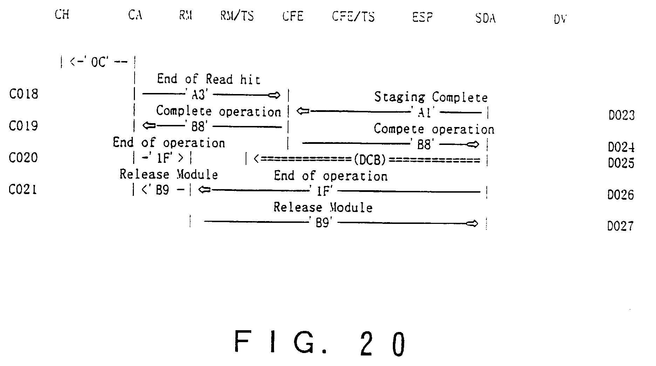

FIGs. 18 through 20 show an operation flow of the process of reading records, which is instructed by a command from the host computer 10. In this process, it is determined which record should be processed according to a command transmitted and received between the channel (CH) 14 of the host computer 10 as a higher order device and the channel adapter (CA) 15 in the magnetic disk control apparatus 11.

The operation flow shows the processes performed among the channel (CH) 14 of the host computer 10; the channel adapter (CA) 15, the resource manager (RM) 17, the resource manager/table storage (RM/TS) 17/20, the cache function engine (CFE) 18, and the cache function engine/table storage (CFE/TS) 18/21 in the magnetic disk control apparatus 11; the extended storage port (ESP) for exchanging data when the CA, DA, RM, and CFE access a memory (read/write process); the SCSI device adapter (SDA); and the DV indicating a device/disk controlled by the DA 16. The SCSI device adapter (SDA) basically indicates the device adapter (DA) 16 in the magnetic disk control apparatus 11, and is called 'SDA' for short to distinguish it from a common DA, because in a certain type of a magnetic disk control apparatus an SCSI bus is used between the DA and the device.

Described below in detail is the process performed as shown in FIGs. 18 through 20. The explanation is given corresponding to the numbers C001 through C007, D001 through D027, and C008 through C021 positioned to the left or right of the flow shown in FIG. 18. For example, an MS in the explanation about D005 is the cache memory 19 in the magnetic disk control apparatus 11.

(C001) CH → CA, Initial Selection Sequence, reception of DX (Define Extent) - LR (Locate Record) command

(C002) CH ↔ CA, The CA writes a parameter of a DX/LR command and a task code/sequence code to a TCB (task control block). The sector value used in (C003) after conversion is also stored in the TCB. Then, it issues a command to the RM to request a queue in the TCB. A response command specifies the continuation of the operation.

(C003) CA → CFE, an inquiry is issued to the CFE about the cache status of the corresponding track. A sector value specified by a higher order device is converted into a leading sector value in the data block containing the value, and the obtained value is used in an inquiry.

(C004) CA ← CFE, The CFE searches the HASH table/LRU table and returns a status (Miss)to the CA.

(C005) CH ← CA, The CA rewrites the task code of the TCB, reports the status X'08' to the LR command, and is disconnected from the CH (channel).

(C006) CA → RM, The CA notifies the RM of the disconnection from the CH.

(C007) CA ← RM, The RM releases the DA.

(D001) RM → DA, The RM instructs an appropriate DA to start operating the device.

(D002) DA ← RM/TS, The DA reads an ATP (active TCB pointer)/TCB/DCB (device control block) from the RM/TS, and recognizes that a staging process is required according to the task code.

(D003) DA → CFE, The DA inquires the CFE of the status of the corresponding track.

(D004) CFE → DA, The CFE searches the HASH table/LRU table, assigns cache memory of 1 track, writes the address to the MS, and then returns a status (Miss) to the DA.

(D005) MS → DA, The DA reads the CBA (cache block address) from the MS to know the cache block address.

(D006) DV → MS, the DA initializes the CA-ACB (asynch. control block)/DA-ACB.

(D007) DA ↔ DV, The DA reads an LUN (logical unit No.) from the DVS (device serial No.)/cylinder/head/sector number to compute the a starting logical block number. Then, an LUN is selected, and a read command is issued. Upon receipt of the read command, the device temporarily disconnects the SCSI bus to perform the disk positioning process.

(D008) RM/TS ← DA, The DA writes the control data to the DA area of the TCB.

(D009) RM ← DA, The DA notifies the RM of the temporary disconnection from the device.

(D010) RM → DA, The RM releases the DA.

(DOll) RM ← DA, upon receipt of the reconnection from the device, the SDA issues an interrupt detection command to the RM.

(D012) RM → DA, The RM issues a start buffer operation command to the DA.

(D013) DA ← TS, The DA reads the ATP/TCB/DCB from the RM/TS.

(D014) MS → DA, The DA reads the CBA/ACB from the MS.

(D015) DA → DV, The DA switches the SCSI phase to message out, returns MESSAGE REJECT in response to the disconnection message, and switches the SCSI phase to data in.

(D016) MS ← DA ← DV, The DA transfers the data to the MS. At this time, the ADT is set to transmit all data blocks from the SCSI to the DA data buffer. The ADT is set to transfer 2 host blocks from the data buffer to the MS.

(D017) MS ← DA, after completing the transfer of the 2 host blocks, the DA confirms that the transfer of the data block 3 to the DA has started, and updates the ACB data block number to allow the CA to access the data block 1.

(D018) RM ← DA, The DA issues a request channel reconnection command to the RM.

(D019) MS ← DA, The DA starts the transfer of the next two host blocks.

(D020) MS ← DA, after the transfer of the 2 host blocks, the DA confirms that the transfer of the data block 5 has started to the DA, and updates the ACB data block number to allow the CA to access the data blocks up to the data block 3.

(D021) DA → DV, The DA repeats the subsequent processes (DO19) and (D020) to the final block.

(D022) DA → DV, The DA updates the ACB data block numbers to allow all data to be accessed after confirming that the transfer of all data to the MS has been successfully performed.

(D023) DA → CFE, The DA reports to the CFE the completion of the staging process.

(D024) DA → CFE, The CFE issues a response command to the DA.

(D025) RM/TS ← DA, The DA updates the DCB.

(D026) RM ← DA, The DA reports to the RM the completion of the TCB process (data transfer process from a device to an MS)

(D027) RM → DA, The RM releases the DA.

(C008) CH ↔ CA, Channel reconnection sequence.

(C009) CA → CFE, The CA inquires of the CFE the track status. A sector value specified by a higher order device is converted into a leading sector value in the DB containing the value, and the obtained value is used in an inquiry.

(C010) CFE → CA, The CFE searches the HASH table/LRU table and returns a status (staging in progress) to the CA after writing the memory address to the MS.

(C011) CA ← MS, The CA reads the CBA from the MS, and recognizes the address on the MS.

(C012) CA → RM/TS, The CA records the cylinder/head value of the track to be processed.

(C013) CA ← MS, The CA reads the DA-ACB from the MS and checks whether or not the DB (data block)-1 can be read.

(C014) CH ← CA ← MS, The CA reads the DB-ID of the DB-1 to perform a searching operation. After completing the searching operation, the CA reports the device end to the channel.

(C015) CH ↔ CA ← MS, The CA receives the READ DATA CMD, reports X' 00' to the channel, reads the count unit from the MS, and recognizes the position of the data unit. It transfers the record 1 data unit to the channel, and returns the channel end + device end to the channel after the completion of the transfer.

(C016) CH ↔ CA ← MS, The CA receives the READ DATA CMD, and reads the DA-ACB to check whether or not the DB-2 can be processed. Since the DB-2 can be processed, the data of record 2 is transferred under similar control of (C015).

(C017) CH ↔ CA ← MS, Similar to (C016).

(C018) CA → CFE, The CA notifies the CFE of the completion of the process of the track.

(C019) CFE → CA, The CFE issues an answer command to the CA.

(C020) CA → RM, The CA reports to the RM the completion of the process between the CA and the channel.

(C021) CA ← RM, The RM releases the CA.

**Claims**

1.  A magnetic disk used in a magnetic storage system having a magnetic disk control apparatus (11) provided between a higher order device (10), for issuing a data input/output instruction to a lower order magnetic storage device (12), and the lower order magnetic storage device (12) having a variable or fixed length storage format, wherein

    when one or more physical disks are divided into a plurality of units as logical disks, one or more of the plurality of units are further divided into a plurality of appropriately arranged areas.

2.  The magnetic disk according to claim 1, wherein

    said plurality of units are n = 1 through k, and said plurality of areas are m = 1 through $\ell$, the area m = 1 corresponding to the unit n = 1 through k is first arranged, then the area m = 2 corresponding to the unit n = 1 through k is arranged, and so forth, and the area m = $\ell$ corresponding to the unit n = 1 through k is finally arranged.

3.  The magnetic disk according to claim 1 or 2, wherein

    on said magnetic disk, there is an area which stores array format information about an array of the divided areas on the disk, and is used by the magnetic disk control apparatus (11) in reading the array format information to recognize the array of the divided areas.

4.  A magnetic storage system having a magnetic disk control apparatus (11) provided between (i) a higher order device (10), for issuing a data input/output instruction to a lower order magnetic storage device (12), and (ii) the lower order magnetic storage device (12) having a variable or fixed length storage format, wherein

    when one or more physical disks are divided into a plurality of units as logical disks, one or more of the plurality of units are further divided into a plurality of appropriately arranged areas, and when a data storage format of a magnetic disk used in the lower order magnetic storage device (12) is different from a data storage format predetermined in a data input/output instruction issued by the higher order device (10), said magnetic disk control apparatus (11) comprises format conversion means which adjusts the difference in data storage format through a format conversion.

5. The magnetic storage system according to claim 4, wherein

said data storage format predetermined in the data input/output instruction issued by the higher order device (10) is a variable CKD (count key data) format; and
said data storage format used in the lower order magnetic storage device (12) is a fixed FBA (fixed block architecture) format.

6. A magnetic disk control apparatus (11) provided between higher order and lower order devices (10,12), the higher order device (10) issuing a data input/output instruction to the lower order magnetic storage device (12), and the lower order magnetic storage device (12) having a variable or fixed length storage format, said magnetic disk control apparatus comprising:

array format information storage means for reading array format information from an area containing the array format information about an array of divided areas and for storing the array format information corresponding to each of one or more physical disks in a magnetic disk in which one or more physical disks are divided into a plurality of units as logical disks, and one or more of the plurality of units are further divided into a plurality of appropriately arranged areas, and
magnetic disk control means for controlling physical disks having different array formats.

7. A magnetic disk in which a physical disk is divided into a plurality of logical disks, wherein

when one or more physical disks are divided into a plurality of units as logical disks, one or more of the plurality of units are further divided into a plurality of appropriately arranged areas.

8. The magnetic disk according to claim 7, wherein

said plurality of units are n = 1 through k, and said plurality of areas are m = 1 through $\ell$, the area m = 1 corresponding to the unit n = 1 through k is first arranged, then the area m = 2 corresponding to the unit n = 1 through k is arranged, and so forth, and the area m = $\ell$ corresponding to the unit n = 1 through k is finally arranged.

9. The magnetic disk according to claim 7, wherein

on said magnetic disk, there is an area which stores array format information about an array of the divided areas on the disk, and is used by the magnetic disk control apparatus (11) in reading the array format information to recognize the array of the divided areas.

FIG. 1

ARRAY FORMAT INFORMATION
STORAGE AREA

LOGICAL CKD DISK
#00 (CYLINDER 0~CKD max)

LOGICAL CKD DISK
#01 (CYLINDER 0~CKD max)

F B A
DISK

LOGICAL CKD DISK
#02 (CYLINDER 0~CKD max)

LOGICAL CKD DISK
#03 (CYLINDER 0~CKD max)

FIG. 2

```
┌──────────────────────────────────────┐
│   UNIT  n  =  1,   AREA  m  =  1      │ ⎫
│   UNIT  n  =  2,   AREA  m  =  1      │ ⎬ REGION  1
│                 ·                    │ │
│   UNIT  n  =  k,   AREA  m  =  1      │ ⎭
├ ─ ─ ─ ─ ─ ─ ─ ─ ─ ─ ─ ─ ─ ─ ─ ─ ─ ─ ┤
│   UNIT  n  =  1,   AREA  m  =  2      │ ⎫
│   UNIT  n  =  2,   AREA  m  =  2      │ ⎬ REGION  2
│                 ·                    │ │
│   UNIT  n  =  k,   AREA  m  =  2      │ ⎭
├ ─ ─ ─ ─ ─ ─ ─ ─ ─ ─ ─ ─ ─ ─ ─ ─ ─ ─ ┤
│ ·               ·               ·    │
│ ·               ·               ·    │
│ ·               ·               ·    │
├ ─ ─ ─ ─ ─ ─ ─ ─ ─ ─ ─ ─ ─ ─ ─ ─ ─ ─ ┤
│   UNIT  n  =  1,   AREA  m  =  ℓ      │ ⎫
│   UNIT  n  =  2,   AREA  m  =  ℓ      │ ⎬ REGION  ℓ
│                 ·                    │ │
│   UNIT  n  =  k,   AREA  m  =  ℓ      │ ⎭
└──────────────────────────────────────┘
```

# F I G.  3

HOST COMPUTER ~ 10

14 14

CHANNEL CHANNEL

MAGNETIC
DISK CONTROL
APPARATUS

C A ~15 20~ T S C A
17~ RM 15 ~11

C - BUS

22 C F E ~18

T S ~ 21

CACHE

19

D A ~16 16~ D A

MAGNETIC
12~ DISK
(FBA)

CA : CHANNEL ADAPTER
DA : DEVICE ADAPTER
RM : RESOURCE MANAGER
CFE : CACHE FUNCTION ENGINE
TS : TABLE STORAGE

FIG. 4

14

| ARRAY FORMAT INFORMATION STORAGE AREA |
|---|
| LOGICAL CKD DISK #00 (CYLINDER 0 ～ n) |
| LOGICAL CKD DISK #01 (CYLINDER 0 ～ n) |
| LOGICAL CKD DISK #02 (CYLINDER 0 ～ n) |
| LOGICAL CKD DISK #03 (CYLINDER 0 ～ n) |
| LOGICAL CKD DISK #00 (CYLINDER n + 1 ～ 2*n+1) |
| LOGICAL CKD DISK #01 (CYLINDER n + 1 ～ 2*n+1) |
| LOGICAL CKD DISK #02 (CYLINDER n + 1 ～ 2*n+1) |
| LOGICAL CKD DISK #03 (CYLINDER n + 1 ～ 2*n+1) |
| LOGICAL CKD DISK #00 (CYLINDER 2*n+2 ～ 3*n+2) |
| LOGICAL CKD DISK #01 (CYLINDER 2*n+2 ～ 3*n+2) |
| LOGICAL CKD DISK #02 (CYLINDER 2*n+2 ～ 3*n+2) |
| LOGICAL CKD DISK #03 (CYLINDER 2*n+2 ～ 3*n+2) |

FBA
DISK

| LOGICAL CKD DISK #02 (CYLINDER m ～ CKD max) |
|---|
| LOGICAL CKD DISK #03 (CYLINDER m ～ CKD max) |

# F I G.  5

```
          ╭─────────────────────╮
          │  CONTROL DEVICE IML  │
          ╰─────────────────────╯
                     │
                     ▼
        ┌─────────────────────────────┐
        │     I M L   S E Q U E N C E  │──── S 1
        └─────────────────────────────┘
                     │
                     ▼
        ┌─────────────────────────────┐
        │ READING ARRAY FORMAT INFORMATION │──── S 2
        │ WRITTEN AT START OF DRIVE    │
        └─────────────────────────────┘
                     │
                     ▼
        ┌─────────────────────────────┐
        │ SAVING ARRAY FORMAT INFORMATION │──── S 3
        │ IN INTERVAL TABLE            │
        └─────────────────────────────┘
                     │
                     ▼
  N O       ◇ HAS ARRAY                 ◇──── S 4
       FORMAT INFORMATION ABOUT ALL DRIVES
                BEEN READ ?
                     │ Y E S
                     ▼
        ┌─────────────────────────────┐
        │    CONTINUING IML SEQUENCE   │──── S 5
        └─────────────────────────────┘
                     ·
                     ·
                     ·
```

# F I G . 6

| | byte 0 | byte 1 | byte 2 | byte 3 |
|---|---|---|---|---|
| 0 0 | Format ID | 0 0 | 0 0 | DV Type ID |

# F I G. 7

RECORD 0 (R0)     RECORD 1(R1)     RECORD 2 (R2)

▽   HA   ROC   ROD   R1C   R1D   R2C   R2D

# F I G. 8

DATA BLOCK O

| ID | BLANK | HA | RO |
|----|-------|----|----|

DATA BLOCK 1

| ID | R1 | R2 | R3 |
|----|----|----|----|

DATA BLOCK 2

| ID | R4 | R5 | R6 |
|----|----|----|----|

←————— 4 kBYTES ————→

FIG. 9

FIG. 10

STAGING PROCESS

RECEIVING START I/O INSTRUCTION FROM RM — S11

READING ATP/TCB FROM RM/TS — S12

INQUIRING WHETHER OR NOT TRACK DATA IS STORED IN MEMORY OF CFE — S13

S14
IS DATA PRESENT IN MEMORY ?

YES → DATA TRANSFER TO HOST COMPUTER

NO

CHECKING ARRAY FORMAT TYPE OF DRIVE TO BE PROCESSED — S15

S16
ARE LOGICAL DISKS ARRANGED FOR EACH LOGIC ?

YES

NO S17
COMPUTING ADDRESS OF LEADING BLOCK AT WHICH READING IS TO START

S18
COMPUTING ADDRESS OF LEADING BLOCK AT WHICH READING IS TO START

SELECTING DRIVE AND ISSUING READ COMMAND — S19

F I G. 1 1

```
┌──────────────── RM／TS ────────────────┐
:                                        :
:                                        :
│                                        │
├────────────────────────────────────────┤
│ ATP  FOR  CFE0 (64  bytes)             │
├────────────────────────────────────────┤
│ ATP  FOR  CFE1 (64  bytes)             │
├────────────────────────────────────────┤
│ ATP  FOR  CA0  (64  bytes)             │
├────────────────────────────────────────┤
│ ATP  FOR  CA1  (64  bytes)             │
├────────────────────────────────────────┤
:                   .                    :
├────────────────────────────────────────┤
│ ATP  FOR  CA15 (64  bytes)             │
├────────────────────────────────────────┤
│ ATP  FOR  DA0  (64  bytes)             │
├────────────────────────────────────────┤
│ ATP  FOR  DA1  (64  bytes)             │
├────────────────────────────────────────┤
:                   .                    :
├────────────────────────────────────────┤
│ ATP  FOR  DA15 (64  bytes)             │
└────────────────────────────────────────┘
```

# F I G.  1 2

| | byte 0 | byte 1 | byte 2 | byte 3 |
|---|---|---|---|---|
| 0 0 | Device type | DV Xfer Rate | TCB NUMBER | |
| 0 4 | C D A | D V S | D G N | P D A |
| 0 8 | DCB Address | | | |
| 0 C | | | | |
| 1 0 | | | | |
| 1 4 | Subsystem Command Buffer Address | | | |
| 1 8 | | | | |
| ... | | | | |
| 3 C | UNUSED AREA | | | |

```
- Device type  :  TYPE OF DEVICE TO BE PROCESSED
- DV Xfer Rate :  DISK TRANSFER RATE
- TCB Number   :  TCB NUMBER
- CDA          :  ADDRESS OF CHANNEL DEVICE
- DVS          :  DEVICE SERIAL NUMBER
- DGN          :  DEVICE GROUP NUMBER
- PDA          :  ADDRESS OF PHYSICAL DEVICE
- DCB Address  :  ADDRESS OF DEVICE CONTROL BLOCK
```

# F I G.  1 3

| RM EXCLUSIVE AREA (80 bytes) |
|---|
| COMMON DEFINITION AREA (48 bytes) |
| DEFINITION AREA FOR EACH TYPE (1 2 8 bytes) |

F I G. 1 4

| | byte 0 | byte 1 | byte 2 | byte 3 |
|---|---|---|---|---|
| 5 0 | CDA | DVS | DGN | PDA |
| 5 4 | CDA 2 | DVS 2 | DGN 2 | PDA 2 |
| 5 8 | BLANK AREA | | | |
| 5 C | TCB TYPE | TASK CODE | TASK FLAG | |

```
CDA       : CHANNEL DEVICE ADDRESS (DEVICE ADDRESS FROM HIGHER ORDER DEVICE)
DVS       : DEVICE SERIAL NUMBER (SERIAL NUMBER OF DEVICE)
DGN       : DEVICE GROUP NUMBER (GROUP CONTAINING DEVICE)
PDA       : PHYSICAL DEVICE ADDRESS (PHYSICAL DEVICE NUMBER)
TCB TYPE  : TYPE OF PROCESS
TASK CODE : CONCRETE CONTENTS OF PROCESS
TASK FLAG : CONTROL FLAG
```

# F I G. 1 5

EP 0 878 756 A2

REGION 0          REGION 1          REGION 2

cylinder 0 - n | cylinder n+1 - 2*n+1 |

| #00 | #01 | #02 | #03 | #00 | #01 | #02 | #03 | #00 | #01 |

FIG. 16

| ┌─ DATA ─┐ | ┌─ DATA ─┐ | ┌─ DATA ─┐ | ┌─ DATA ─┐ | ┌─ DATA ─┐ |
|:---:|:---:|:---:|:---:|:---:|
| BLOCK 0 - 1 | BLOCK 0 - 2 | BLOCK 0 - 3 | BLOCK 0 - 4 | BLOCK 1 - 1 |

↑
LEADING BLOCK ADDRESS
BY EQUATION (2)

↑
ADDRESS WHEN HOST COMPUTER
SPECIFIES SECTOR VALUE OF 5

# F I G. 1 7

```
      CH         CA      RM    RM/TS    CFE    CFE/TS    ESP      SDA         DV
       |          |
C001  ┌───────────────────────────────┐
      │ - Initial Selection            │
      │       Sequence                 │
      │                                │
      │ - DX-LR  RECEIVING COMMAND     │
      │                                │
      └───────────────────────────────┘
C002   |          ┌──────────────┐
       |          │ GENERATING TCB│
       |          │ REQUEST FOR  │
       |          │    QUEUE     │
       |          └──────────────┘
C003   |          | =========(CEP) ============> |
       |                    READ Query
C004   |          | ────── '92' ───────⇒ |
       |                 Notify cache status<Miss>
C005   |          | ⇐───── '66' ─────── |
       |          | <========(CEP) ============ |
       | <─'08' ── |
C006          CH Disconnect Notification
                   | ─'11' > |
C007             Release Module
                   | <'B9' ─ |
       ~      ~       ~      ~       ~       ~       ~       ~        ~
                      |              Start operation                  |
                      | ─────────────── '51' ────────────────⇒ |        D001
                      | =====(ATP/TCB/DCB) ======> |                     D002
                      |             | <=====(CEP) ======= |              D003
                      |                  Reconfirm Query   |
                      | ⇐─────────── '94' ─────────── |
                      | =====(CBA) =====> |                              D004
                      |  Notify cache status<Miss>
                      | ─────────── '66' ─────────⇒ |                    D005
                      |       | ======(CEP) ======> |
                      |                  | =(CBA) => |
                      |                  | <=(ACB) = |                    D006
                      |                              | <Select> |        D007
                      |                              | <Msg Out>
                      |                              | <CMD>    |
                      |                              | ─────⇒ |
                      |                              | <Discon>
                      | <===========(TCB) =============== |              D008
                      |    Device Disconnect Notification                D009
                      | ⇐────────── '15' ───────────── |
                      |         Release Module
                      | ─────────── '89' ───────────⇒ |                  D010
```

# F I G.  1 8

CH    CA    RM    RM/TS    CFE    CFE/TS    ESP    SDA    DV

RAID Interrupt detect      <Recon>    D011
| ⇐————————'19'——————— | <MSG-In>

Proceed SCSI Reconnect operation
| ————————'53'————————⇒ |     D012
| =========(ATP/TCB/DCB)=======> |     D013
| =(CBA)=> |     D014
| =(ACB)=> | <Msg-Out>     D015
<DataIn> |
    D016

····ID1····  ····ID1····
DB1    DB1

····ID2····  ····ID2····
DB2    DB2

Request Channel Reconnection <=(ACB)=  ····ID3····     D017
C008   ⇐————————'1A'———————     D018
DB3     D019

Req-In Sequence   ····ID3····
DB3

C009   | =========(CEP)============> |   ····ID4····
READ query
| ————'92'———— ⇒ |   DB4
| =====(CBA)=====>  ····ID4····

Notify cache status<Staging inp>
C010   | ⇐————'66'———— |   DB4
| <========(CEP)============ |  ····ID5····
C011   | <====( CBA )================================   DB5
C012   | ====(DCB)====> |
C013   | <====( ACB )================================ | <=(ACB)=     D020
C014   | <-'04'— | <====( ID1 )================================     D021
C015   | —'RD'-> |   ····ID5···
| <-'00'— | <=====( R1 Count )=================   ····ID6····
DB5    DB6

<<< READ Data <<<

C016   | <-'0C'— |
| —'RD'-> |
| <-'00'— | <=====( R2 Count )=================   ····ID7····

<<< READ Data <<<   ····ID12····

C017   | <-'0C'— |
| —'RD'-> |   DB12
| <-'00'— | <=====( ID2 )=================
|   | <=====( R3 Count )=================

<<< READ Data <<<   <=(ACB)= |     D022

# F I G.  1 9

CH      CA    RM   RM/TS   CFE   CFE/TS   ESP   SDA    DV

```
       | <-'OC' -- |
       |           End of Read hit
C018   |  ———' A3' ———————⇨ |                Staging Complete
       |  Complete operation | ⇦——————————' A1' ——— |          D023
C019   | ⇦——' B8' ———————— |            Compete operation
       End of operation     |  ———————————' B8' ———⇨ |          D024
C020   | -' 1F' > |    | <============(DCB)============ |         D025
       Release Module       End of operation
C021   | <' B9 — | ⇦——————————' 1F' ———————————— |             D026
                         Release Module
       | ——————————' B9' ——————————⇨ |                        D027
```

# F I G.  2 0